# FASCICULE DE BREVET EUROPEEN

(11) **EP 1 431 638 B1**
(45) Date de publication et mention de la délivrance du brevet: **26.07.2006**
(21) Numéro de dépôt: 03293109.9
(22) Date de dépôt: 11.12.2003
(51) Int. Cl.: F16K 27/08, F16K 31/122, F16K 49/00, F16L 59/20, F16K 31/363

(54) **Dispositif de vanne cryogénique à actionneur pneumatique**
Kryogenventil mit pneumatischer Betätigungsvorrichtung
Cryogenic valve device with pneumatic actuator

(30) Priorité: 18.12.2002 FR 0216064
(43) Date de publication de la demande: 23.06.2004
(73) Titulaire: SNECMA, 75015 Paris (FR)
(72) Inventeur: Authelet, Franck, 27200 Vernon (FR); Cramer, Michel, 27380 Douville-sur-Andelle (FR); Feger, Damien, 27200 Vernon (FR); Pattyn, Jean-Luc, 27600 Gaillon (FR)
(74) Mandataire: Desormiere, Pierre-Louis

(56) Documents cités:
- GB-A- 2 135 025
- US-A- 3 253 611
- US-A- 3 260 496
- US-A- 3 650 290
- US-A- 3 910 165

## Description

### Domaine de l'invention

La présente invention concerne les vannes servant à contrôler le débit d'un fluide cryogénique. L'invention concerne plus particulièrement la réalisation et la mise en oeuvre d'actionneurs pneumatiques fonctionnant avec un gaz de commande pour manoeuvrer de telles vannes.

### Art antérieur

Les actionneurs pneumatiques utilisant des fluides de commande, tels que de l'air ou de l'azote comprimés, pour manoeuvrer des vannes cryogéniques, sont déportés thermiquement par rapport au corps de vanne qui est à la température cryogénique considérée, de façon que la température de fonctionnement de ces actionneurs reste proche de la température ambiante. Ainsi, en permettant au gaz de commande de se maintenir au voisinage de la température ambiante, le risque de liquéfaction du gaz de commande ou de formation de cristaux dans celui-ci est écarté, ce qui permet d'utiliser le même type d'actionneurs que ceux utilisés pour des fluides non cryogéniques.

Toutefois, afin de réduire suffisamment la liaison thermique entre l'actionneur et le corps de la vanne à commander et assurer une liaison mécanique avec la pièce mobile contrôlant le débit, la solution habituellement retenue consiste à intercaler, entre l'actionneur et le corps de vanne, une tige de commande entourée d'un fourreau isolant. Cette tige de commande doit être suffisamment robuste pour transmettre les efforts de commande tout en ayant une longueur relativement importante pour garantir une résistance thermique suffisante. Cette longueur est typiquement de l'ordre du mètre. A l'extension de la tige de commande s'ajoute la hauteur de l'actionneur lui-même. Ceci résulte en un dispositif de vanne qui présente un encombrement plus important qu'une vanne non cryogénique. De plus, l'éloignement de la masse de l'actionneur par rapport à l'axe de la tuyauterie peut conduire à des efforts importants sur celle-ci, par exemple lorsque le dispositif de vanne est destiné à être placé dans des environnements perturbés sources de vibrations, chocs ou accélérations.

D'autre part, dans les systèmes actuels, la partie de la tige située en dehors du fourreau isolant est exposée au milieu extérieur ainsi que le système d'étanchéité associé. Ceci entraîne des risques de dégradation des pièces exposées et, par conséquent, du fonctionnement de la vanne.

Pour éviter de tels inconvénients, il peut être envisagé d'utiliser un actionneur pneumatique cryogénique directement accolé au corps de la vanne, mais cela impose, pour empêcher le risque de liquéfaction du gaz de commande dans l'actionneur, de recourir à l'une des deux solutions suivantes.

La première solution consiste à limiter la pression de commande du fluide pneumatique à une valeur inférieure à la pression de saturation du gaz de commande correspondant à la température de la vanne. Par exemple, si on considère une vanne montée sur une conduite de circulation de gaz naturel liquéfié (GNL), dont la température est de l'ordre de 111°K, actionnée par de l'azote sec dont la pression de saturation à la température de 111°K est de 1.55 MPa, il faut utiliser une pression de commande inférieure à cette valeur pour éviter la liquéfaction de l'azote dans l'actionneur. Cette limitation est évidemment pénalisante car elle dimensionne directement les surfaces actives de l'actionneur et, par conséquent, majore ses dimensions, sa masse et son coût.

La deuxième solution consiste à utiliser, comme fluide pneumatique, un fluide ayant une température de liquéfaction bien inférieure à celle du corps de la vanne pour éviter la liquéfaction du gaz de commande dans l'actionneur. Dans la plupart des applications cryogéniques, la seule solution pour satisfaire ce besoin est d'utiliser des gaz relativement coûteux, et dangereux dans certains cas, tels que de l'hélium, de l'hydrogène ou du néon. Cette solution est donc limitée à des applications où les exigences de réduction de masse et de volume prévalent sur celle des coûts comme c'est le cas, par exemple, dans les applications spatiales.

De plus, lorsqu'on utilise un actionneur pneumatique accolé au corps de vanne, des problèmes de fuites du gaz de commande ainsi que du fluide cryogénique peuvent apparaître aussi bien entre l'actionneur et le corps de vanne qu'avec l'environnement externe. En effet, en raison de la proximité de l'actionneur du corps de la vanne, des remontées du fluide cryogénique peuvent se produire dans l'actionneur. De telles remontées entraînent une chute de la température dans l'actionneur et un mélange qui n'est pas souhaitable dans l'actionneur entre le fluide de commande et le fluide cryogénique. De même, il existe un risque qu'une partie du fluide pneumatique utilisé dans l'actionneur puisse pénétrer dans le corps de vanne et se mélanger avec le fluide cryogénique. Une telle pollution du fluide cryogénique par le fluide de commande n'est évidemment pas non plus souhaitable. Enfin, en cas d'une diffusion (i.e. fuite) du fluide de commande et/ou du fluide cryogénique dans le dispositif, le ou les fluides peuvent circuler dans ce dernier et s'échapper à l'extérieur ce qui peut être dans certains cas (ex. environnement explosifs) très dangereux.

Les documents US-A-3 260 496, US-A-3 253 611 et GB-A-2 135 025 décrivent des dispositifs de vanne cryogénique dans lesquels l'actionneur est découplé du corps de vanne.

### Objet et description succincte de l'invention

La présente invention vise à remédier aux inconvénients précités et à réaliser une vanne cryogénique à actionneur pneumatique qui forme un ensemble compact et qui présente un coût de réalisation et de fonctionnement réduit.

Ces buts sont atteints grâce à un dispositif de vanne cryogénique comprenant un corps de vanne délimitant un conduit de circulation d'un fluide cryogénique, un élément d'obturation disposé dans le conduit et relié à une tige de commande pour manoeuvrer ledit élément d'obturation entre une position de fermeture dans laquelle il ferme le conduit et une position d'ouverture dans laquelle le fluide cryogénique circule librement dans le conduit de manière à contrôler le débit du fluide cryogénique, et un actionneur pneumatique comprenant une chambre renfermant un piston en liaison avec la tige de commande, cette chambre délimitant deux cavités alimentées avec un gaz de commande permettant de positionner le piston dans une position quelconque entre la position de fermeture et la position d'ouverture de l'élément d'obturation. L'actionneur est fixé au corps de vanne par l'intermédiaire d'une chambre en surpression par rapport à la pression environnante pour maintenir la température de l'actionneur à une température intermédiaire entre la température du corps de vanne et la température ambiante et pour isoler l'ensemble des parties internes du dispositif de l'environnement externe.

Ainsi, il est possible d'utiliser un gaz de commande dont la température de saturation ou la température critique est égale ou supérieure à la température du fluide cryogénique présent dans le conduit et ceci en limitant le déport entre l'actionneur et le corps de la vanne. Plus précisément, grâce au découplage thermique réalisé par la présence d'une chambre intermédiaire interposée entre l'actionneur et le corps de vanne, il est possible de maintenir la température de l'actionneur à des niveaux qui éliminent le risque de liquéfaction du gaz dans l'actionneur. En particulier, si la température du gaz de commande est maintenue au-dessus de la température critique, la pression de commande du gaz peut être élevée à la valeur souhaitée, ce qui permet de diminuer les dimensions de l'actionneur de façon significative.

La chambre intermédiaire disposée entre l'actionneur et le corps de vanne constitue un volume de confinement et permet d'isoler le corps de vanne d'une fuite de gaz de commande et, inversement, l'actionneur d'une fuite de gaz cryogénique. Pour cela, la chambre comprend une ouverture éventuellement reliée à un dispositif de récupération de fuites qui débouche à proximité du dispositif, si il n'y a pas de risque (pollution, explosion,...), ou qui est relié à un conduit pour acheminer les fuites jusqu'à un zone non sensible ou sécurisée. De plus, le dispositif de récupération de fuites peut être relié à un appareil de mesure de débit ou d'analyse de composition chimique de gaz pour détecter tout dysfonctionnement de la vanne et/ou de l'actionneur.

Deux ouvertures peuvent être aussi ménagées de chaque côté de la chambre intermédiaire pour permettre le balayage de cette dernière avec un fluide neutre participant alors au découplage thermique par convection. Les surpressions excessives en cas de fuites dans la chambre intermédiaire sont également évitées.

Selon une caractéristique de l'invention, la chambre intermédiaire peut être équipée d'une cale d'isolation thermique de manière à accroître le découplage thermique entre l'actionneur et le corps de vanne.

Selon une autre caractéristique de l'invention, l'actionneur comporte sur sa surface externe des moyens pour augmenter les entrées thermiques dans ce dernier.

Selon une autre caractéristique, l'actionneur comporte sur sa surface externe un matériau isolant pour limiter les échanges thermiques entre l'actionneur et l'extérieur.

Conformément à un premier mode de réalisation de l'invention, l'actionneur pneumatique est de type actionneur linéaire pour actionner un élément d'obturation en forme de clapet, le piston dans l'actionneur comportant une tige reliée à la tige de commande par des moyens d'accouplement pour transmettre un mouvement linéaire à la tige de commande reliée au clapet de manière à manoeuvrer ce dernier entre la position de fermeture dans laquelle le clapet est en contact avec un siège ménagé dans le conduit et la position d'ouverture dans laquelle le clapet est levé verticalement à distance dudit siège.

Dans ce cas, le dispositif de vanne peut comprendre en outre une cale d'isolation disposée entre la tige de commande et la tige de piston au niveau des moyens d'accouplement pour réduire les échanges thermiques entre l'actionneur et l'élément d'obturation (ici le clapet).

Suivant un second mode de réalisation de l'invention, l'actionneur pneumatique est de type actionneur rotatif pour actionner un élément d'obturation type papillon ou boisseau, le piston étant relié à la tige de commande par une bielle pour transmettre un mouvement de rotation à la tige de commande reliée au papillon de manière à faire pivoter ce dernier entre la position de fermeture et d'ouverture.

Dans ce cas, le dispositif de vanne peut comprendre en outre une cale d'isolation interposée entre la tige de commande et la bielle, ainsi qu'entre la tige de commande et le papillon, pour réduire les échanges thermiques entre l'actionneur et l'élément d'obturation.

Le découplage thermique de l'élément d'obturation (clapet ou papillon) permet d'éviter le chemin de conduction thermique direct entre l'élément d'obturation et le piston de l'actionneur.

De plus, le piston peut comprendre une première et une seconde cales d'isolation disposées respectivement de chaque côté du point de liaison entre la bielle et le piston pour réduire les échanges thermiques entre l'actionneur et l'élément d'obturation. La bielle peut être également constituée d'un matériau isolant thermiquement.

Selon une caractéristique de l'invention, l'actionneur comprend en outre des circuits d'acheminement du gaz de commande qui forment des échangeurs thermiques avec l'actionneur ou le corps de vanne pour éviter des chutes de pression brutales du gaz de commande lors de son injection dans l'actionneur.

Le gaz de commande peut provenir d'une source de gaz spécifique, ou bien, être directement issu du fluide cryogénique qui circule dans le conduit comme dans le cas d'une installation de gaz naturel liquéfié par exemple. Dans ce dernier cas, le dispositif de vanne comprend en outre une conduite de prélèvement du fluide cryogénique connectée entre le conduit et une ouverture d'alimentation en gaz de commande de la chambre, ladite conduite comprenant un moyen de vaporisation du fluide cryogénique prélevé, et une conduite de réinjection du gaz de commande connectée entre une ouverture d'évacuation du gaz de commande de la chambre et le conduit, ladite conduite comprenant un moyen de condensation du gaz évacué.

Le gaz de commande utilisé dans l'actionneur peut être de l'azote sec ou de l'air sec par exemple.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1A est une vue en coupe d'un premier mode de réalisation de vanne à actionneur pneumatique en position fermée,
- la figure 1B est une vue en coupe d'un premier mode de réalisation de vanne à actionneur pneumatique en position ouverte,
- la figure 2 est une en coupe d'une variante de réalisation d'une partie de la vanne illustrée à la figure 1A,
- la figure 3 est une vue en perspective d'un deuxième mode de réalisation de vanne à actionneur pneumatique conformément à l'invention,
- la figure 4 est une vue en coupe verticale de la vanne de la figure 3 selon le plan de coupe III.

### Description détaillée des modes de réalisation de l'invention

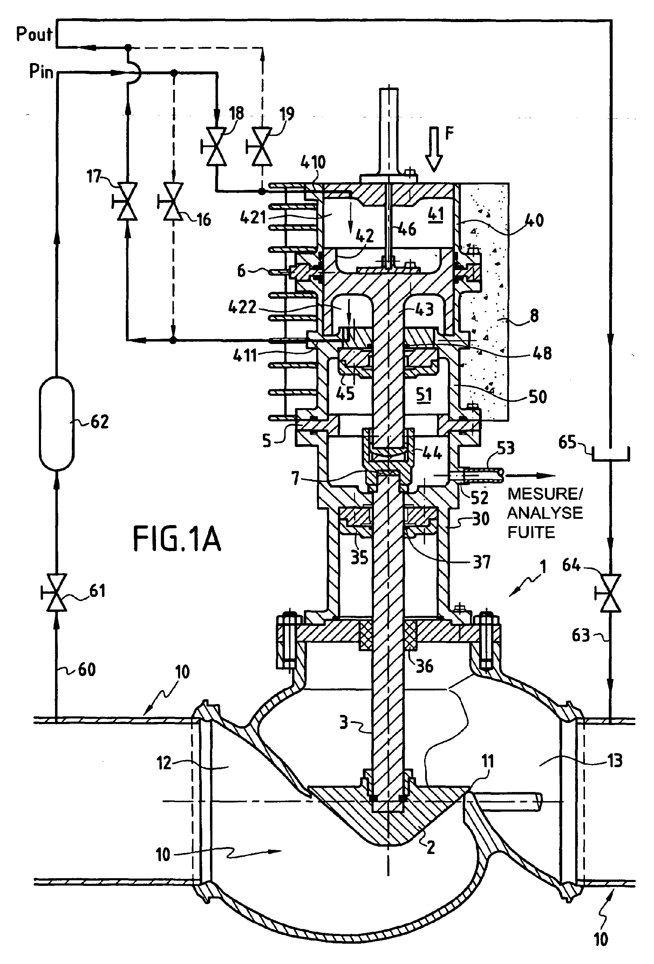

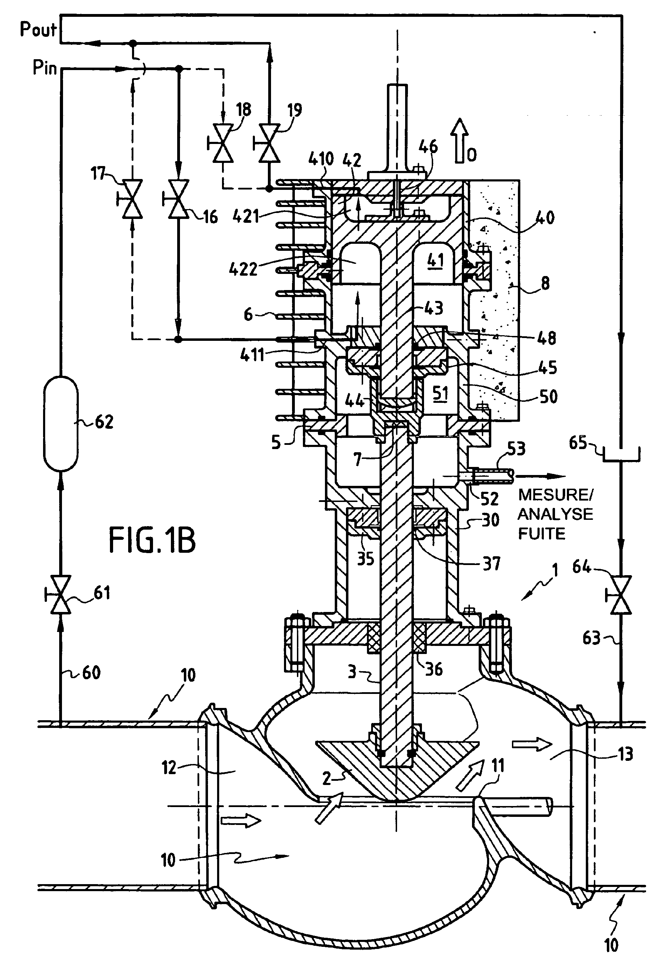

La figure 1A représente, selon un premier mode de réalisation de l'invention, un dispositif de vanne qui comprend un corps de vanne 1 formé d'un conduit 10 dans lequel circule un fluide cryogénique et d'un carter 30 fixé sur la partie supérieure du conduit. Le conduit 10 comporte une portion amont 12 et une portion aval 13 séparées par un clapet 2. Le clapet 2 est relié à une tige de commande 3 qui coulisse verticalement dans des paliers de guidage 35 et 36 pour manoeuvrer le clapet 2 entre une position de fermeture où le clapet repose sur un siège 11 formé dans le conduit et une position d'ouverture où le clapet s'élève verticalement au-dessus du siège (figure 1B). Ceci permet de contrôler le débit du fluide cryogénique dans le conduit.

Pour transmettre un mouvement de commande à la tige 3, le dispositif de vanne comprend un actionneur pneumatique 4. L'actionneur 4 est formé d'un carter 40 définissant une chambre 41 dans laquelle un piston 42 est mobile.

Le piston 42 définit une "frontière" d'étanchéité dans la chambre 41 pour délimiter deux cavités 421 et 422 dont le volume est variable en fonction de la position du piston. Afin de commander le déplacement du piston, la chambre 41 comporte deux ouvertures 410 et 411 ménagées respectivement de chaque côté de la chambre pour permettre l'introduction ou l'échappement du gaz de commande dans chacune des cavités de la chambre 41. A cet effet, chacune des ouvertures 410, 411 est reliée, par exemple, à des électrovannes pour sélectivement remplir de gaz de commande ou évacuer la cavité de la chambre considérée. Plus précisément, l'ouverture 410 coopère avec deux électrovannes 18 et 19 respectivement reliées à une conduite d'alimentation en pression de gaz de commande Pin et à une conduite d'échappement du gaz de commande Pout. De même, l'ouverture 411 coopère avec des électrovannes 16 et 17 respectivement reliées à la conduite d'alimentation en pression de gaz de commande Pin et à la conduite d'échappement du gaz de commande Pout.

La commande de la vanne s'effectue par pilotage des électrovannes 16 à 19. Sur la figure 1A, la vanne est actionnée dans le sens de fermeture (flèche F), c'est-à-dire que le clapet 2 est descendu vers le siège 11 pour diminuer la circulation du fluide dans le conduit 10. Cette manoeuvre est réalisée par ouverture des électrovannes 18 et 17 permettant, via l'électrovanne 18, d'alimenter la cavité 421 de la chambre 41 en pression de gaz de commande et, via l'électrovanne 17, d'évacuer la pression de gaz de commande présent dans la cavité 422.

Pour actionner la vanne dans le sens d'ouverture, telle qu'illustrée sur la figure 1B (flèche O), il suffit d'inverser les commandes en ouverture et fermeture des électrovannes. Ainsi, on ferme les électrovannes 17 et 18 et on ouvre les électrovannes 16 et 19 pour, d'une part, alimenter en pression de commande la cavité 422 et, d'autre part, vider la cavité 421 et provoquer le déplacement du piston 42 vers le haut de la chambre 41 pour décoller le clapet 2 du siège 11.

On notera que toute position intermédiaire entre la position de fermeture et d'ouverture peut être obtenue avec le dispositif de vanne en ajustant la pression dans chacune des cavités 421 et 422 au moyen des électrovannes ou tout autre moyen équivalent. Par commande des électrovannes, on peut positionner le piston à une position quelconque entre la fermeture et l'ouverture pour réguler le débit du fluide.

Le piston 42 comporte une tige 43 qui s'étend verticalement, au travers d'un palier de guidage 45, vers le corps de vanne 1 sensiblement le long de l'axe de la tige de commande 3 du clapet. L'extrémité libre de la tige de piston 43 est reliée à l'extrémité de la tige de commande 3 par un dispositif d'accouplement 44 qui autorise deux translations et deux rotations dans un plan perpendiculaire à l'axe de la vanne.

Le fluide pneumatique utilisé pour la commande de l'actionneur peut être un gaz délivré par une source de gaz spécifique ou être directement prélevé du fluide qui circule dans le conduit de la vanne comme c'est possible dans une installation GNL par exemple. Dans ce dernier cas, comme représentée sur la figure 1A, le dispositif de vanne comprend une première conduite de dérivation 60 qui prélève une partie du fluide circulant dans le conduit 10 en amont de la vanne. La commande de prélèvement est réalisée par une électrovanne 61. Le fluide étant sous forme liquide, la partie du fluide prélevée traverse un évaporateur 62 pour transformer le liquide en gaz avant de l'injecter dans la chambre 41 (Pin) via l'électrovanne 16 ou 18. En se vaporisant, le fluide monte en pression et peut servir de gaz de commande. Inversement, de l'autre côté (Pout), le gaz, qui doit être évacué, est réinjecté dans le conduit 10 en aval de la vanne par une seconde conduite de dérivation 63. Son débit est contrôlé par une électrovanne 64 en amont de laquelle est disposé un condenseur 65 pour transformer le gaz en liquide avant sa réinjection. A titre d'exemple, pour un fluide GNL circulant dans le conduit 10 à une température de 111 °K et à une pression maximum de 10 bars, on peut fournir à l'actionneur, qui est maintenu à une température supérieure à la température critique du méthane, un gaz de commande d'une capacité en pression de 80 bars du fait de l'évaporation.

Pour réaliser un dispositif de vanne cryogénique à actionneur pneumatique compact, il faut pouvoir contrôler non seulement le niveau des échanges thermiques entre le corps de vanne et l'actionneur mais aussi l'isolation des fluides à l'intérieur du dispositif ainsi que l'isolation du dispositif vis-à-vis des entrées externes. En effet, si l'actionneur descend à une température cryogénique inférieure à la température de saturation (pour une pression donnée) ou à la température critique du gaz de commande utilisé, il y a alors un risque de condensation et de liquéfaction du gaz dans l'actionneur, ce qui en perturberait le fonctionnement. D'autre part, il faut prévenir toute fuite du gaz de commande de l'actionneur dans le corps de vanne et, inversement, toute fuite du fluide cryogénique dans l'actionneur. Dans ce dernier cas, la remontée du fluide cryogénique dans l'actionneur entraînerait une chute de la température du gaz de commande.

A cet effet, le dispositif de vanne selon l'invention comprend une chambre intermédiaire 51 formée par un carter 50. Les figures 1A et 1B montrent un dispositif de vanne comprenant une telle chambre. La chambre 51 est interposée entre le carter 40 de l'actionneur et le carter 30 du corps de vanne de manière à découpler thermiquement ces deux éléments. Ainsi, grâce aux échanges thermiques entre l'actionneur et l'extérieur, ce dernier se maintient à une température intermédiaire entre la température du corps de vanne et la température ambiante, cette température intermédiaire étant au-dessus de la température de saturation ou de la température critique du gaz utilisé pour la commande de l'actionneur.

La chambre 51 est maintenue en surpression soit par la présence de fuites du gaz de commande et/ou du fluide cryogénique dans celle-ci, soit par un dispositif d'alimentation externe (non représenté) reliée à la chambre. Cette surpression protège le dispositif de l'environnement extérieur pour empêcher notamment l'entrée d'humidité dans ce dernier.

Une première barrière d'étanchéité 37 peut être placée entre la chambre intermédiaire 51 et le carter 30 du corps de vanne tandis qu'une seconde barrière d'étanchéité 48 peut être placée entre la chambre 51 et le carter 40 de la chambre de piston 41.

D'autre part, la chambre 51 comprend une ouverture 52 qui peut être éventuellement reliée à un dispositif de récupération de fuites 53 comme par exemple une mise à l'air par orifice avec clapet anti-retour qui permet de palier à une défaillance de la surpression dans la chambre. Les surpressions excessives en cas de fuites peuvent être ainsi évitées. Lorsque que l'environnement extérieure n'est pas sensible ou ne présente pas de dangers (ex. pollution ou danger d'explosion) vis-à-vis des fuites de gaz de commande et/ou de fluide cryotechnique, l'ouverture 52 ou le dispositif de récupération de récupération de fuite 53 peut déboucher à proximité du dispositif de vanne. Dans le cas contraire, l'ouverture ou le dispositif de récupération de fuite est relié à un conduit pour acheminer les fuites jusqu'à une zone non sensible ou non dangereuse. De plus, il est possible de connecter au dispositif de récupération de fuites un appareil de mesure de débit ou d'analyse de composition chimique de gaz afin de détecter un éventuel dysfonctionnement de la vanne ou de l'actionneur, ou bien des deux.

Ainsi, grâce à cette chambre intermédiaire montée entre le corps de vanne et l'actionneur, le fluide circulant dans l'actionneur est isolé du fluide circulant dans la vanne, les fuites pouvant être acheminées à l'extérieur du dispositif.

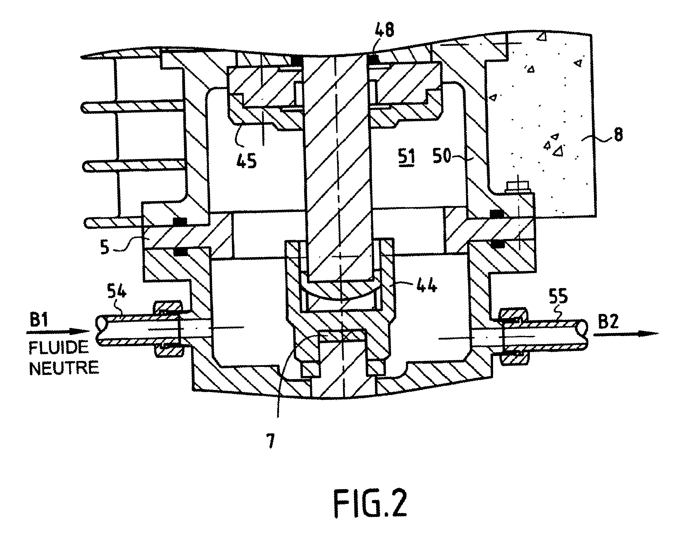

Selon une variante de réalisation de la chambre intermédiaire illustrée en figure 2, celle-ci peut être munie de deux ouvertures 54 et 55. Avec une telle réalisation, il est alors possible de balayer la chambre avec un fluide neutre en légère surpression et à température ambiante. Ceci permet non seulement d'empêcher le mélange des fluides circulant dans l'actionneur et la vanne respectivement, mais aussi d'utiliser le balayage de fluide neutre pour générer une convection forcée entre la vanne et l'actionneur augmentant ainsi le découplage thermique entre ces derniers.

La chambre intermédiaire 51 peut comprendre en outre une cale isolante thermiquement 5. La cale isolante 5 permet d'accroître le découplage thermique entre l'actionneur et le corps de la vanne. L'épaisseur ainsi que le matériau de la cale sont déterminés en fonction du découplage thermique que l'on souhaite obtenir à partir des conditions d'utilisations (température du fluide cryogénique, température critique ou de saturation du gaz de commande, fuites thermiques, ...).

Une cale d'isolation thermique supplémentaire 7 peut être également disposée entre la tige de commande 3 et la tige de piston 43 au niveau du dispositif d'accouplement 44.

Suivant les cas, la paroi externe de l'actionneur peut être recouverte soit d'un dispositif 6 pour augmenter les échanges thermiques entre l'actionneur et l'extérieure tel que des ailettes, radiateur ou similaire, soit, au contraire, d'une couche d'isolant 8 pour limiter les échanges thermiques vers l'actionneur et empêcher la formation de givre.

Ainsi, grâce au découplage thermique entre le corps de vanne et l'actionneur, il est possible de réduire de manière significative la longueur de la tige de commande entre le clapet et l'actionneur puisque ce dernier peut être, à l'épaisseur de la chambre intermédiaire près, accolé au corps de la vanne.

Ce découplage thermique permet aussi de tirer parti des échanges thermiques entre l'actionneur et l'extérieur, d'une part, ainsi qu'entre l'actionneur et le corps de vanne, d'autre part, pour maintenir la température de l'actionneur dans une plage déterminée. La plage de température de l'actionneur peut être ajustée en fonction de la hauteur de la chambre intermédiaire et/ou, suivant les cas, de l'efficacité de la cale 5 et de la cale supplémentaire 7 le cas échéant. Enfin, l'efficacité du dispositif 6 ou de la couche isolante 8, qui respectivement amplifie ou limite les échanges thermiques entre l'actionneur et l'extérieur, peut aussi participer à l'ajustement de la plage de température de l'actionneur.

A titre d'exemple non limitatif, on considère une vanne cryogénique, montée sur un circuit de circulation d'un fluide de gaz naturel liquéfié (GNL) dont la température est de l'ordre de 111 °K, et que l'on souhaite commander avec de l'azote sec. Si la température de l'actionneur est proche de celle du corps de la vanne, la pression de commande doit être limitée à 1.5 MPa pour éviter la liquéfaction de l'azote.

En revanche, si on dispose la chambre intermédiaire 51, il est possible de maintenir la température de l'actionneur au-dessus de la température critique de l'azote, à savoir 126 °K. Par conséquent, la liquéfaction de l'azote peut être empêchée quelle que soit la pression de commande. L'encombrement et la masse de l'ensemble vanne/actionneur peuvent être sensiblement réduits en comparaison avec les solutions de l'art antérieur où l'actionneur est déporté de la vanne. Ainsi, selon la présente invention, l'actionneur peut être cryogénique, c'est-à-dire qu'il peut être directement accolé à la vanne via la chambre 51, ce qui permet de réduire significativement la longueur de la tige de commande du clapet. De plus, l'actionneur peut être rendu compact par l'utilisation d'une pression de commande élevée puisque celle-ci n'est plus limitée par le risque de liquéfaction du gaz de commande.

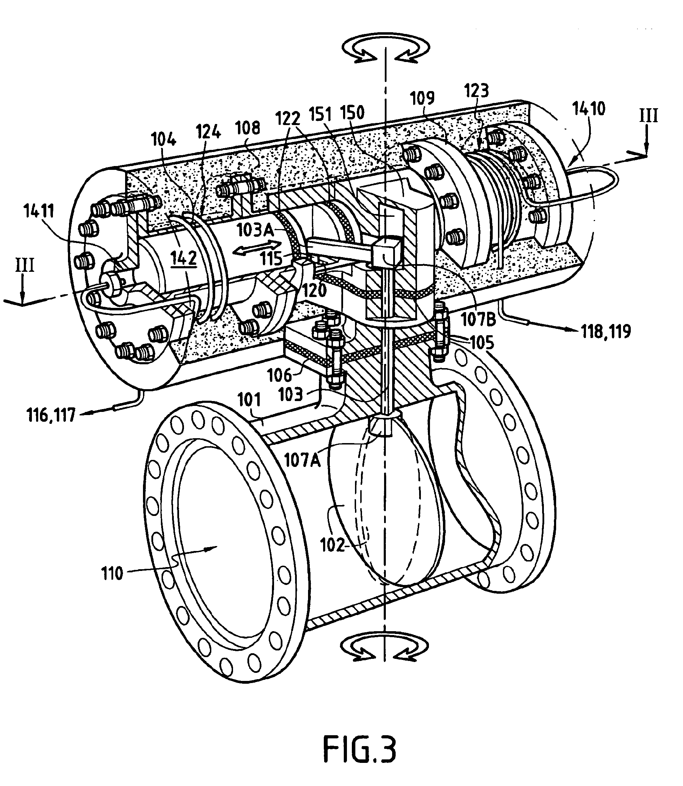

La figure 3 illustre un second mode de réalisation de l'invention appliquée ici à un dispositif de vanne de type vanne à obturateur rotatif tel qu'un papillon comprenant un corps de vanne 101 définissant une portion de conduit 110 destinée à être raccordée à un circuit de circulation de fluide cryogénique. Un élément d'obturation ou papillon 102 est disposé dans la portion de conduit 110. Le papillon 102 présente des dimensions sensiblement égales au diamètre interne du conduit 110 pour obturer ce dernier dans sa position de fermeture. Le débit de fluide dans le conduit 110 est contrôlé en fonction du degré d'ouverture du papillon 102.

Afin de pouvoir manoeuvrer le papillon 102 entre sa position de fermeture et d'ouverture, celui-ci est relié à une tige de commande 103 qui lui transmet un mouvement de rotation définissant ainsi l'axe de révolution du papillon.

Pour animer la tige de commande d'un mouvement de rotation pour la commande du papillon 102, un actionneur pneumatique 104 est accolé au corps de vanne 101. L'actionneur 104 est formé d'un corps cylindrique 109 définissant une chambre 141 dans laquelle un piston 142 se déplace.

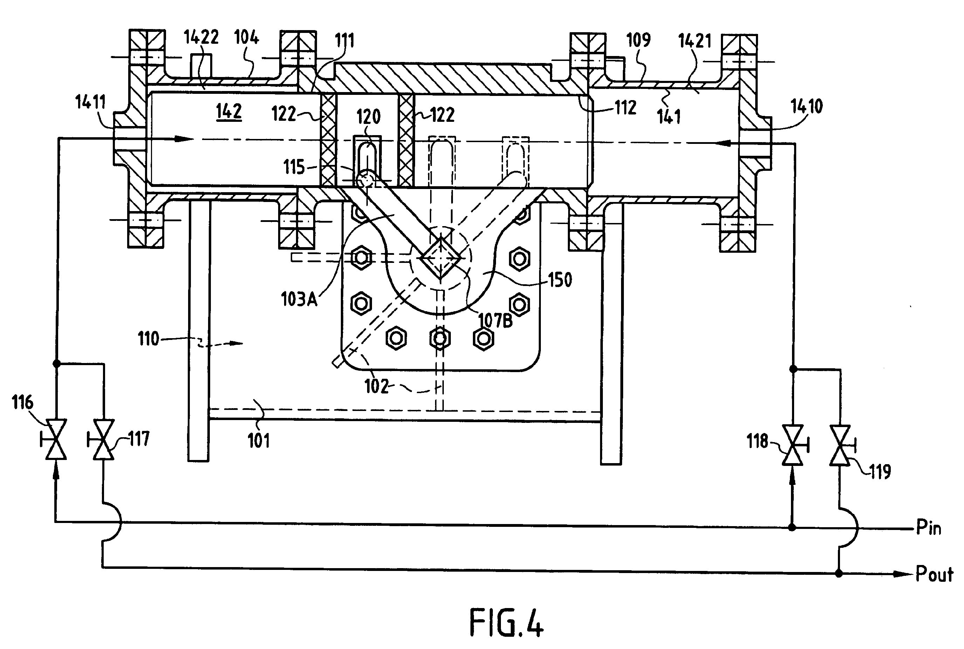

Comme on peut le voir sur la figure 4, le piston 142 sépare deux cavités 1421 et 1422 dans la chambre 141, leur volume étant variable en fonction de la position du piston. De la même manière que pour le dispositif de vanne décrit précédemment, le mouvement du piston 142 est commandé par alimentation/évacuation de pression en gaz de commande dans les cavités 1421 et 1422. Pour cela, la chambre 141 comporte deux ouvertures 1410 et 1411 ménagées respectivement de chaque côté de la chambre pour permettre l'introduction ou l'échappement du gaz de commande dans chacune des cavités de la chambre 141. Chaque ouverture 1410, respectivement 1411, est reliée à deux électrovannes 118 et 119, respectivement 116 et 117, pour sélectivement mettre en communication la portion de la chambre considérée avec une conduite d'alimentation en pression de gaz de commande Pin ou une conduite d'échappement du gaz de commande Pout.

La commande de la vanne s'effectue donc par pilotage des électrovannes 116 à 119, ce qui permet de déterminer l'angle d'ouverture du papillon dans le conduit pour la régulation du débit de fluide. De chaque côté de la partie centrale l'actionneur, on a disposé des garnitures d'étanchéité 111 et 112 entre le piston et la paroi interne du corps 109 pour empêcher les fuites entre les cavités 1421 et 1422.

Le fluide pneumatique utilisé pour la commande de l'actionneur peut être un gaz délivré par une source de gaz spécifique ou être directement prélevé du fluide qui circule dans le conduit de la vanne comme c'est possible dans une installation GNL par exemple. Dans ce dernier cas, le système de prélèvement et de réinjection du fluide (évaporateur, condenseur, électrovannes) dans le conduit décrit en relation avec le dispositif de vanne représentée sur la figure 1A, peut être mise en oeuvre de la même façon avec le dispositif de vanne ici considéré.

Le mouvement du piston 142 est transmis à la tige de commande 103 du papillon 102 par l'intermédiaire d'une bielle 103A qui permet de convertir le mouvement de translation du piston en un mouvement rotatif sur la tige de commande. A cet effet, l'extrémité de la bielle 103A peut être munie d'un élément 115 mobile dans un logement 120 afin de suivre le déplacement du piston et transmettre un mouvement de rotation à la tige de commande à son extrémité opposée.

Pour découpler thermiquement l'actionneur 104 du corps de vanne 101, une chambre intermédiaire 151 formée par un carter 150 est interposée au niveau de la partie de contact entre l'actionneur et la vanne (figure 3) comme pour le dispositif de vanne illustré en figures 1A, 1B et 2. Par conséquent, du fait des échanges thermiques entre l'actionneur et l'extérieur, la température de l'actionneur peut être maintenue à une température intermédiaire entre la température du corps de la vanne et la température ambiante. La chambre 151 est maintenue en surpression comme expliqué précédemment. De même, elle peut comprendre également une ouverture et éventuellement un dispositif de récupération de fuites relié ou non à un conduit d'acheminement. Alternativement, la chambre 151 peut être aussi balayée par un fluide neutre mis en oeuvre de la même façon que décrit précédemment générant en outre une convection forcée entre l'actionneur et la vanne.

Les échanges thermiques entre l'actionneur et l'extérieur peuvent être encore limités par disposition d'une cale en matériau isolant 105 au niveau de la chambre 151.

En augmentant l'épaisseur de la cale isolante de quelques millimètres, ce qui est peu pénalisant du point de vue de l'encombrement, il est possible d'augmenter la température de l'actionneur à des niveaux qui permettent d'étendre le choix des matériaux utilisables pour les garnitures d'étanchéité 111 et 112 entre le piston 142 et la chambre 141. L'épaisseur de la cale permet également d'augmenter le chemin thermique entre l'actionneur et le corps de vanne réduisant ainsi les entrées thermiques transitant de l'actionneur vers le corps de vanne.

Si cela est nécessaire, l'effet de la cale isolante 105 entre l'actionneur et le corps de vanne pourra être renforcé par l'addition d'une ou plusieurs cales isolantes telles qu'une cale 106 interposée au niveau de la portion de contact entre l'actionneur et le corps de vanne, une cale 107A interposée entre la tige de commande 103 et le papillon 102 et/ou une cale 107B interposée entre la bielle 103A et la tige de commande 103, pour réduire les échanges thermiques entre l'actionneur et le papillon 102.

Les échanges thermiques entre l'actionneur et l'extérieur peuvent être encore limités par disposition d'un matériau isolant 108 sur la surface externe de l'actionneur. Alternativement, comme pour l'actionneur 4 du premier mode de réalisation illustré en figure 1A, un dispositif, tel qu'un radiateur ou des ailettes, peut être prévu sur l'actionneur pour augmenter les entrées thermiques dans ce dernier.

Comme illustré sur les figures 3 et 4, le piston 142 peut être équipé de cales d'isolation 122 arrangées de chaque côté de la liaison mécanique entre le piston et la bielle 103A.

Si cela est nécessaire, la bielle 103A peut être réalisée en un matériau isolant thermiquement.

D'autre part, si l'on souhaite porter la température du gaz injecté à la température de l'actionneur, il est possible de faire transiter ce gaz par un échangeur thermique en contact avec l'actionneur ou le corps de vanne. Sur la figure 3, deux échangeurs thermiques 123 et 124, de type serpentin, sont arrangés respectivement autour du corps de l'actionneur 104 pour permettre au gaz de commande de se refroidir progressivement avant son entrée dans l'actionneur.

Ces dispositifs d'échangeurs thermiques permettent d'éviter la chute de pression du gaz de commande due à la baisse de température lors de l'injection dans la chambre du gaz de commande. Ils peuvent être aussi utilisés avec l'actionneur 4 du dispositif de vanne illustré en figures 1A et 1B.

Ainsi, la présente invention permet l'utilisation de gaz tels que de l'azote ou de l'air sec dans la commande pneumatique de vannes fonctionnant à des températures cryogéniques et ceci sans avoir à déporter l'actionneur du corps de la vanne. Cette solution est particulièrement avantageuse dans des installations où ce type de gaz est déjà disponible comme c'est le cas dans la plupart des installations de transfert, de stockage ou de liquéfaction des gaz dans lesquelles de l'azote sec est nécessaire pour assurer l'assainissement ou l'inertage des équipements.

Si on considère par exemple une installation de gaz naturel liquéfié (GNL) dont la température normale d'ébullition de ce gaz est de 111 °K. Pour l'azote, cette température correspond à une pression de saturation de 1.55 MPa, pression limite du gaz de commande à partir de laquelle celui-ci commence à se liquéfier dans l'actionneur si ce dernier est en contact thermique direct avec le corps de vanne à la température du GNL. Cette limite de pression a un impact direct sur la conception de l'actionneur qui doit alors présenter des surfaces pneumatiques suffisantes pour fournir les efforts nécessaires pour manoeuvrer l'élément d'obturation de la vanne, ce qui entraîne un encombrement important de l'actionneur.

En revanche, si, conformément à la présente invention, l'actionneur est maintenu à une température supérieure à 126.2 °K qui est la température critique de l'azote, il n'y a plus de risque de condensation du gaz de commande dans l'actionneur, celui-ci étant dans un état supercritique quelle que soit la pression de commande utilisée. Ceci permet de porter la pression de commande à des valeurs bien supérieures à la pression limite lorsque l'actionneur est en liaison thermique directe avec le corps de vanne. Par conséquent, il est possible de réduire significativement la masse et l'encombrement de l'actionneur tout en produisant le même effort sur l'élément d'obturation de la vanne.

Un autre aspect des dispositifs de vanne selon l'invention décrits précédemment réside dans le fait que tout les éléments du dispositif, à savoir le corps de vanne, l'actionneur, et le cas échéant la chambre intermédiaire, sont enfermés dans des carters formant un ensemble étanche vis-à-vis de l'extérieur. Cette étanchéité entre le dispositif et le milieu ambiant permet d'éviter les fuites des fluides présents dans le dispositif. Dans le cas d'une installation de gaz explosif ou inflammable, tel que du gaz naturel par exemple, le dispositif de vanne selon l'invention peut être placé près d'autres équipements sans risque d'inflammation. D'autre part, grâce à cette étanchéité interne/externe du dispositif de vanne, ce dernier peut être placé, voire immergé, dans des environnements corrosifs ou autres sans risque pour le fonctionnement du dispositif. De plus, l'étanchéité est statique, ce qui augmente encore le niveau de fiabilité du dispositif en comparaison avec les systèmes d'étanchéité dynamiques.

Outre l'application avec le gaz GNL, l'invention peut être appliquée pour d'autres fluides cryogéniques tels que de l'azote ou de l'oxygène par exemple.

## Revendications

1. Dispositif de vanne cryogénique comprenant un corps de vanne (1) délimitant un conduit (10) de circulation d'un fluide cryogénique, un élément d'obturation (2) disposé dans le conduit et relié à une tige de commande (3) pour manoeuvrer ledit élément d'obturation entre une position de fermeture dans laquelle il ferme le conduit (10) et une position d'ouverture dans laquelle le fluide cryogénique circule librement dans le conduit de manière à contrôler le débit du fluide cryogénique, un actionneur pneumatique (4) comprenant une chambre (41) délimitant deux cavités (421, 422) renfermant un piston (42) en liaison avec la tige de commande (3), les cavités étant alimentées avec un gaz de commande pour positionner le piston dans une position quelconque entre la position de fermeture et la position d'ouverture de l'élément d'obturation, et une chambre intermédiaire (51) disposée entre l'actionneur (4) et le corps de vanne (1), **caractérisé en ce que** ladite chambre intermédiaire est en surpression par rapport à la pression environnante et comprend une ouverture (52) de manière à découpler thermiquement l'actionneur du corps de vanne et à isoler l'ensemble des parties internes du dispositif de l'environnement.

2. Dispositif de vanne selon la revendication 1, **caractérisé en ce que** la chambre intermédiaire (51) comprend une cale d'isolation thermique (5).

3. Dispositif de vanne selon la revendication 1 ou 2, **caractérisé en ce que** la tige de commande (3) comprend en outre une cale d'isolation thermique (7) de manière à découpler thermiquement l'élément d'obturation du piston.

4. Dispositif de vanne selon l'une des revendications 1 à 3, **caractérisé en ce que** l'actionneur, la chambre intermédiaire et le corps de vanne comprennent chacun un carter (40; 50; 30), lesdits carters étant reliés entre eux de façon étanche pour confiner le gaz de commande et le fluide cryogénique à l'intérieur du dispositif.

5. Dispositif de vanne selon l'une des revendications 1 à 4, **caractérisé en ce que** l'ouverture (52) de la chambre intermédiaire (51) est connectée à un dispositif de récupération de fuites (53).

6. Dispositif de vanne selon la revendication 5, **caractérisé en ce que** le dispositif de récupération de fuites est relié à un appareil de mesure pour détecter un dysfonctionnement de la vanne ou de l'actionneur.

7. Dispositif de vanne selon l'une des revendications 1 à 4, **caractérisé en ce que** la chambre intermédiaire comprend une seconde ouverture (55) pour faire circuler dans ladite chambre un fluide de balayage.

8. Dispositif de vanne selon l'une quelconque des revendications 1 à 7, **caractérisé en ce que** l'actionneur comporte sur sa surface externe des moyens (6) pour augmenter les entrées thermiques dans ce dernier.

9. Dispositif de vanne selon l'une quelconque des revendications 1 à 7, **caractérisé en ce que** l'actionneur comporte sur sa surface externe un matériau isolant (8) pour limiter les échanges thermiques entre l'actionneur et l'extérieur.

10. Dispositif de vanne selon l'une quelconque des revendications 1 à 9, **caractérisé en ce que** l'actionneur pneumatique est de type actionneur linéaire pour actionner un élément d'obturation (2) en forme de clapet, le piston (42) dudit actionneur comportant une tige (43) reliée à la tige de commande (3) par des moyens d'accouplement (44) pour transmettre un mouvement linéaire à la tige de commande reliée au clapet de manière à manoeuvrer celui-ci de la position de fermeture dans laquelle le clapet est en contact avec un siège (11) ménagé dans le conduit (10) et la position d'ouverture dans laquelle le clapet est levé verticalement à distance dudit siège.

11. Dispositif de vanne selon l'une quelconque des revendications 1 à 9, **caractérisé en ce que** l'actionneur pneumatique (104) est de type actionneur rotatif pour actionner un élément d'obturation rotatif (102) de type papillon, le piston (142) étant relié à la tige de commande (103) par une bielle (103A) pour transmettre un mouvement de rotation à la tige de commande reliée au papillon de manière à positionner celui-ci dans une position quelconque entre la position de fermeture et d'ouverture.

12. Dispositif de vanne selon la revendication 11, **caractérisé en ce qu'**il comprend en outre une cale d'isolation (107B) interposée entre la tige de commande (103) et la bielle (103A) pour réduire les échanges thermiques entre l'actionneur et l'élément d'obturation rotatif (102).

13. Dispositif de vanne selon la revendication 11 ou 12, **caractérisé en ce qu'**il comprend en outre une cale d'isolation (107A) interposée entre la tige de commande (103) et l'élément d'obturation rotatif (102) pour réduire les échanges thermiques entre l'actionneur et l'élément d'obturation.

14. Dispositif de vanne selon l'une quelconque des revendications 11 à 13, **caractérisé en ce que** le piston (142) comprend une première et une seconde cales d'isolation (22) disposées respectivement de chaque côté du point de liaison entre la bielle (103A) et le piston (142) pour réduire les échanges thermiques entre l'actionneur et l'élément d'obturation.

15. Dispositif de vanne selon l'une quelconque des revendications 11 à 14, **caractérisé en ce que** la bielle (103A) est constituée d'un matériau d'isolation thermique.

16. Dispositif de vanne selon l'une quelconque des revendications 1 à 15, **caractérisé en ce que** l'actionneur comprend en outre un premier et un second circuits d'acheminement du gaz de commande, lesdits circuits d'acheminement formant des échangeurs thermiques (123, 124) avec l'actionneur (104) ou le corps de vanne (101).

17. Dispositif de vanne selon l'une quelconque des revendications 1 à 16, **caractérisé en ce qu'**il comprend en outre une conduite de prélèvement (60) du fluide cryogénique connectée entre le conduit (10) et une ouverture d'alimentation en gaz (410) de commande de la chambre, ladite conduite (60) comprenant un moyen de vaporisation (62) du fluide cryogénique prélevé, et une conduite de réinjection (63) du gaz de commande connectée entre une ouverture d'évacuation (411) du gaz de commande de la chambre et le conduit, ladite conduite (63) comprenant un moyen de condensation (65) du gaz évacué.

18. Dispositif de vanne selon l'une quelconque des revendications 1 à 17, **caractérisé en ce que** le gaz de commande a une température de saturation ou une température critique sensiblement égale ou supérieure à la température du fluide cryogénique présent dans le conduit.

19. Dispositif de vanne selon la revendication 18, **caractérisé en ce que** le gaz de commande utilisé dans l'actionneur est de l'azote sec.

20. Dispositif de vanne selon la revendication 18, **caractérisé en ce que** le gaz de commande utilisé dans l'actionneur est de l'air sec.

## Claims

1. A cryogenic valve device comprising a valve body (1) defining a cryogenic fluid flow duct (10), a shutter element (2) disposed in the duct and connected to a control rod (3) for moving said shutter element between a closed position in which it closes the duct (10) and an open position in which the cryogenic fluid flows freely along the duct, thereby controlling the flow rate of the cryogenic fluid, a pneumatic actuator (4) comprising a chamber (41) defining two cavities (421, 422) and containing a piston (42) in connection with the control rod (3), the cavities being fed with a control gas for positioning the piston in any position between the closed position and the open position of the shutter element, and an intermediate chamber (51) disposed between the actuator (4) and the valve body (1), the valve device being **characterised in that** said intermediate chamber is at positive pressure relative to the surrounding pressure and comprises an opening (52) in such a manner as to thermally decouple the actuator from the valve body and isolate the internal portions of the device as a whole from the surrounding environment.

2. A valve device according to claim 1, **characterised in that** the intermediate chamber (51) comprises a thermally insulating spacer (5).

3. A valve device according to claim 1 or claim 2, **characterised in that** the control rod (3) further comprises a thermally insulating spacer (7) for thermally decoupling the shutter element from the piston.

4. A valve device according to one of claims 1 to 3, **characterised in that** the actuator, the intermediate chamber, and the valve body include respective casings (40; 50; 30), said casings being interconnected in leaktight manner so as to confine the control gas and the cryogenic fluid inside the device.

5. A valve device according to one of claims 1 to 4, **characterised in that** the intermediate chamber (51) includes an opening (52) connected to a leak-recovery device (53).

6. A valve device according to claim 5, **characterised in that** the leak-recovery device is connected to a measuring appliance for detecting malfunction of the valve or of the actuator.

7. A valve device according to one of claims 1 to 4, **characterised in that** the intermediate chamber includes a second opening (55) to enable a sweeping fluid to flow through said chamber.

8. A valve device according to any one of claims 1 to 7, **characterised in that** the actuator includes means (6) on its outside surface for increasing the inflow of heat thereto.

9. A valve device according to any one of claims 1 to 7, **characterised in that** the actuator includes insulating material (8) on its outside surface to limit heat exchange between the actuator and the outside.

10. A valve device according to any one of claims 1 to 9, **characterised in that** the pneumatic actuator is of the linear actuator type for actuating a shutter element (2) in the form of a valve member, the piston (42) of said actuator having a rod (43) connected to the control rod (3) via coupling means (44) for transmitting linear movement to the control rod connected to the valve member so as to move the valve member between the closed position in which the valve member is in contact with a seat (11) provided in the duct (10), and an open position in which the valve member is raised vertically to a distance from said seat.

11. A valve device according to any one of claims 1 to 9, **characterised in that** the pneumatic actuator (104) is of the pivoting actuator type for actuating a pivotal shutter element (102) of the butterfly type, the piston (142) being connected to the control rod (103) by a crank (103A) for transmitting pivoting movement to the control rod connected to the butterfly so as to position the butterfly in an arbitrary position between the closed position and the open position.

12. A valve device according to claim 11, **characterised in that** it further comprises an insulating spacer (107B) interposed between the control rod (103) and the crank (103A) for reducing heat exchange between the actuator and the pivotal shutter element (102).

13. A valve device according to claim 11 or claim 12, **characterised in that** it further comprises an insulating spacer (107A) interposed between the control rod (103) and the pivotal shutter element (102) to reduce heat exchange between the actuator and the shutter element.

14. A valve device according to any one of claims 11 to 13, **characterised in that** the piston (142) includes first and second insulating spacers (22) disposed respectively on either side of a connection point between the crank (103A) and the piston (142) to reduce heat exchange between the actuator and the shutter element.

15. A valve device according to any one of claims 11 to 14, **characterised in that** the crank (103A) is made of a thermally insulating material.

16. A valve device according to any one of claims 1 to 15, **characterised in that** the actuator further comprises first and second control gas delivery circuits, said delivery circuits forming heat exchangers (123, 124) with the actuator (104) or the valve body (101).

17. A valve device according to any one of claims 1 to 16, **characterised in that** it further comprises a pipe (60) for taking cryogenic fluid, the pipe being connected between the duct (10) and a control gas feed opening (410) for the chamber, said pipe (60) including means (62) for vaporizing the cryogenic fluid that has been taken, and a pipe (63) for reinjecting the control gas which is connected between a control gas exhaust opening (411) of the chamber and the duct, said pipe (63) including means (65) for condensing the exhausted gas.

18. A valve device according to any one of claims 1 to 17, **characterised in that** the control gas has a saturation temperature or a critical temperature that is substantially equal to or greater than the temperature of the cryogenic fluid present in the duct.

19. A valve device according to claim 18, **characterised in that** the control gas used in the actuator is dry nitrogen.

20. A valve device according to claim 18, **characterised in that** the control gas used in the actuator is dry air.

## Patentansprüche

1. Kryogenventilvorrichtung, umfassend einen Ventilkörper (1), der eine Leitung (10) zur Zirkulation eines kryogenen Fluids begrenzt, ein Stopfenelement (2), das in der Leitung angeordnet ist und der mit einer Steuerstange (3) verbunden ist, um das Stopfenelement zwischen einer Schließstellung, in der es die Leitung (10) verschließt und einer Öffnungsstellung, in der das kryogene Fluid frei in der Leitung fließen kann, derart zu betätigen, daß der Durchsatz des kryogenen Fluids geregelt wird, ein pneumatisches Stellglied (4), umfassend eine Kammer (41), die zwei Hohlräume (421, 422) begrenzt, die einen Kolben (42) einschließen, der mit der Steuerstange (3) verbunden ist, wobei die Hohlräume mit einem Steuergas versorgt werden, um den Kolben in einer beliebigen Stellung zwischen der Schließ- und Öffnungsstellung des Stopfenelements zu stellen und eine Zwischenkammer (51), die zwischen dem Stellglied (4) und dem Ventilkörper (1) angeordnet ist, **dadurch gekennzeichnet, daß** die Zwischenkammer unter Überdruck im Vergleich zu dem Umgebungsdruck steht und daß sie eine Öffnung (52) derart umfaßt, daß das Stellglied des Ventilkörpers thermisch entkoppelt ist und die Gesamtheit der inneren Teile der Vorrichtung von der Umgebung isoliert ist.

2. Ventilvorrichtung nach Anspruch 1, **dadurch gekennzeichnet, daß** die Zwischenkammer (51) einen Wärmeisolierkeil (5) umfaßt.

3. Ventilvorrichtung nach einem der Ansprüche 1 oder 2, **dadurch gekennzeichnet, daß** die Steuerstange (3) ferner einen Wärmeisolierkeil (7) umfaßt, um das Stopfenelement thermisch von dem Kolben zu entkoppeln.

4. Ventilvorrichtung nach einem der Ansprüche 1 bis 3, **dadurch gekennzeichnet, daß** das Stellglied, die Zwischenkammer und der Ventilkörper jeweils ein Gehäuse (40; 50; 30) umfassen, wobei die Gehäuse miteinander in dicht verbunden sind, um das Steuergas und das kryogene Fluid innerhalb der Vorrichtung einzuschließen.

5. Ventilvorrichtung nach einem der Ansprüche 1 bis 4, **dadurch gekennzeichnet, daß** die Öffnung (52) der Zwischenkammer (51) mit einer Vorrichtung zur Wiedergewinnung von Verflüchtigungen (53) verbunden ist.

6. Ventilvorrichtung nach Anspruch 5, **dadurch gekennzeichnet, daß** die Vorrichtung zur Wiedergewinnung von Verflüchtigungen mit einem Meßgerät zur Detektierung einer Betriebsstörung des Ventils oder des Stellglieds verbunden ist.

7. Ventilvorrichtung nach einem der Ansprüche 1 bis 4, **dadurch gekennzeichnet, daß** die Zwischenkammer eine zweite Öffnung (55) umfaßt, um ein Spülfluid in der Kammer zirkulieren zu lassen.

8. Ventilvorrichtung nach einem der Ansprüche 1 bis 7, **dadurch gekennzeichnet, daß** das Stellglied Mittel (6) auf seiner Außenfläche umfaßt, um die Anzahl der Wärmeeintritte in es zu erhöhen.

9. Ventilvorrichtung nach einem der Ansprüche 1 bis 7, **dadurch gekennzeichnet, daß** das Stellglied ein dämmendes Material auf seiner Außenfläche umfaßt, um die Wärmeaustausche zwischen der Stellglied und der Außenumgebung zu beschränken.

10. Ventilvorrichtung nach einem der Ansprüche 1 bis 9, **dadurch gekennzeichnet, daß** das pneumatische Stellglied ein pneumatisches Stellglied linearen Typs ist, um ein Stopfenelement (2) in Klappenform zu betätigen, wobei der Kolben (42) des Stellglieds eine Stange (43) umfaßt, die mit der Steuerstange (3) durch Kopplungsmittel (44) verbunden ist, um eine lineare Bewegung zu übertragen auf die Steuerstange, die mit der Klappe verbunden ist, letztere von der Schließstellung, in der die Klappe in Kontakt mit einem Sitz (11) ist, die in der Leitung (10) behaust ist und der Öffnungsstellung, in der die Klappe vertikal hochgehalten und entfernt vom Sitz ist, zu bewegen.

11. Ventilvorrichtung nach einem der Ansprüche 1 bis 9, **dadurch gekennzeichnet, daß** das pneumatische Stellglied (104) vom Typ eines Drehstellglieds ist, um einen Drehstopfenelement (102) vom Drosselklappentyp zu betätigen, wobei der Kolben (142) mit der Steuerstange (103) mit Hilfe einer Lenkstange (103A) verbunden ist, um auf die Steuerstange, die mit der Drosselklappe verbunden ist, eine Drehungsbewegung derart zu übertragen, daß jene in eine beliebige Stellung zwischen den Schließ- und Öffnungsstellungen gestellt wird.

12. Ventilvorrichtung nach Anspruch 11, **dadurch gekennzeichnet, daß** sie ferner einen Isolierkeil (107B) umfaßt, der zwischen der Steuerstange (103) und der Lenkstange (103A) eingefügt ist, um die Wärmeaustausche zwischen dem Stellglied und dem Drehstopfenelement (102) zu reduzieren.

13. Ventilvorrichtung nach einem der Ansprüche 11 oder 12, **dadurch gekennzeichnet, daß** sie ferner eine Isolierkeil (107A) umfaßt, die zwischen der Steuerstange (103) und dem Drehabschlusskopf (102) eingeschaltet ist, um den Wärmeverkehr zwischen der Stellglied und dem Abschlusskopf zu reduzieren.

14. Ventilvorrichtung nach einem der Ansprüche 11 bis 13, **dadurch gekennzeichnet, daß** der Kolben (142) einen ersten und einen zweiten Isolierkeil (22) umfaßt, die an beiden Seiten des Verbindungspunktes zwischen der Lenkstange (103A) und dem Kolben (142) angeordnet sind, um die Wärmeaustausche zwischen der Stellglied und dem Abschlußkopf zu reduzieren.

15. Ventilvorrichtung nach einem der Ansprüche 11 bis 14, **dadurch gekennzeichnet, daß** die Schubstange (103A) aus einem wärmeisolierenden Material besteht.

16. Ventilvorrichtung nach einem der Ansprüche 1 bis 15, **dadurch gekennzeichnet, daß** das Stellglied ferner einen ersten und einen zweiten Kreislauf zur Beförderung des Steuergases umfaßt, wobei die Beförderungskreisläufe Wärmetauscher (123, 124) mit dem Stellglied (104) oder dem Ventilkörper (101) bilden.

17. Ventilvorrichtung nach einem der Ansprüche 1 bis 16, **dadurch gekennzeichnet, daß** sie ferner eine Entnahmeleitung (60) des kryogenen Fluids umfaßt, die zwischen der Leitung (10) und der Öffnung (410) zur Versorgung mit Steuergases der Kammer verbunden ist, wobei die Leitung (60) ein Verdampfungsmittel (62) des entnommenen Kryogene Fluids und eine Rückfuhrleitung (63) des Steuergases, die zwischen einer Abzugsöffnung (411) des Steuergases aus der Kammer und der Leitung angeordnet ist, umfaßt, wobei die Leitung (63) ein Kondensierungsmittel (65) des evakuierten Gases umfaßt.

18. Ventilvorrichtung nach einem der Ansprüche 1 bis 17, **dadurch gekennzeichnet, daß** das Steuergas eine Sättigungstemperatur oder eine kritische Temperatur aufweist, die im wesentlichen gleich oder größer ist als die Temperatur des kryogenen Fluids, das sich in der Leitung befindet.

19. Ventilvorrichtung nach Anspruch 18, **dadurch gekennzeichnet, daß** das Steuergas, das in dem Stellglied benutzt wird, trockener Stickstoff ist.

20. Ventilvorrichtung nach Anspruch 18, **dadurch gekennzeichnet, daß** das Steuergas, das in dem Stellglied benutzt wird, trockene Luft ist.
